# EUROPEAN PATENT SPECIFICATION

(11) **EP 2 886 930 B1**
(45) Date of publication and mention of the grant of the patent: **14.11.2018**
(21) Application number: 13199293.5
(22) Date of filing: 23.12.2013
(51) Int. Cl.: F16M 13/04, A45F 3/10

(54) **Carrying device**
Tragevorrichtung
Dispositif de transport

(43) Date of publication of application: 24.06.2015
(73) Proprietor: Sacci Ryggsäckar AB, 784 36 Borlänge (SE)
(72) Inventor: Strandberg, Stefan, 118 53 Stockholm (SE); Andrén, Mårten, 163 46 Spånga (SE); Haglöf, Anders, 781 92 Borlänge (SE)
(74) Representative: Bergenstråhle Group AB

(56) References cited:
- US-A- 3 767 095
- US-A1- 2005 201 744
- US-A1- 2008 264 236

## Description

### TECHNICAL FIELD

The invention relates to a carrying device for a person or user who needs to carry objects, which need to be accessible during the carrying, said carrying device being adjustable and foldable.

### BACKGROUND

Carrying devices for carrying objects that need to be accessible during the carrying are known in the art. The carrying devices may be configured to carry maps, working procedures for working in the field and more recently for carrying computers, tablets and other electronic instruments that need to be accessible in the field while the user is standing or walking. The object can also be a music instrument, such as a guitar or keyboard. A typical application field of such carrying devices is military, construction and construction mapping, planning, etc. The carrying devices are designed so that the object is positioned in front of a user's torso and they usually comprise some kind of a hook or strap. The hook or strap is configured to be placed over a person's shoulder. The frame of known carrying devices is usually made of a rigid material such as plastic or metal, since the object, which may be placed on a tray of the carrying device, should move as little as possible during the carrying. Carrying devices according to the prior art can have a double hook or single hook design.

US 2008264236 A1 discloses a marching carrier including rods for supporting a musical instrument. US 20090272779 A1 illustrates a foldable portable universal laptop computer holder and harness for hands free mobile use. The foldable portable universal laptop computer holder comprises a laptop tray frame, which receives the laptop computer, said laptop tray frame being connected to a tray arm which is connected to a torso bar. The torso bar is connected to a chest support and from the chest support a pair of shoulder supports in the form of hooks extend. The shoulder supports or shoulder hooks engage a user's left and right shoulder when the foldable portable universal laptop computer holder is placed on a user. The shoulder hooks can pivoted towards the chest support and the laptop tray frame can be folded up for easy storage and transport of the foldable portable universal laptop computer holder.

The holder illustrated in US 20090272779 A1 comprises various parts and it is not adjustable to a shape and size of a user's torso, in particular is it not adjustable to a user's shoulder and/or chest width. In addition, the weight of the holder and the laptop computer rests on the soft parts of the shoulder of the user, which may cause aching or sore tissue after a while.

EP 1,257,182 A1 illustrates a carrying device as it is known comprising a single hook design. The hook is configured to extend over a user's shoulder and a free end of the hook is configured to engage the shoulder blades of a user, for example via a shoulder blade rest comprising a padding or the like. The carrying device according to EP 1,257,182 A1 is easy to use and the weight of the carrying device and the object such as the tablet or laptop computer rests on the bone structure (shoulder blade) of the user. This prevents sore tissue and aching, especially when the carrying device needs to rest on a user for comparably long time. However, the adjustability of the carrying device according to EP 1,257,182 A1 is slightly limited.

### SUMMARY

The present invention relates to a carrying device as defined by claim 1. Preferred features of the invention are set-out in the dependent claims. An object of the present invention is to provide a carrying device that is flexible in its use, easy to handle and robust.

Another object of the present invention is to provide a carrying device that is easily adjustable to different body shapes of different users.

Another object of the present invention is to provide a carrying device that is ergonomic.

Disclosed herein is a carrying device comprising a single hook portion having a shoulder blade rest arranged at a free end of the hook portion, a front portion connected to the hook portion and an object support element connected to the front portion. The object support element is configured to carry an object and the hook portion is configured to be placed on the user from one side and to extend over a user's shoulder so that the shoulder blade rest engages the shoulder blades of the user and so that the front portion is resting on a user's front torso.

The hook portion comprises a width adjusting mechanism configured to adjust the width of a hook opening of the hook portion.

The object may for example be a map, any type of book, a plan, a tablet computer, a laptop computer, a GPS (global positioning system), etc.

Such a carrying device provides a high degree of flexibility and can be adapted to various sizes of various users, in particular to various chest or torso widths of different users, as measured from a back to a front torso of a user.

The width of the hook opening may be measured between the free end of the hook portion and an upper end of the front portion.

This eases the placement of the carrying device on the user since the carrying device can placed from the side or by tilting it. It does not need to be placed by lifting it over the head, which may be advantageous, especially when the user wears a helmet or the like.

In another embodiment the hook portion may comprise a folding mechanism arranged to allow folding of the hook portion between unfolded position and a folded position, said folding mechanism being arranged in an upper region of the hook portion.

The folding mechanism allows easy stowage and transport of the carrying device. Arranging the folding mechanism in an upper region of the hook portion maximizes the effect of the folding mechanism, when the hook portion is in the folded position.

Preferably the folding mechanism is arranged, at least more or less, in the middle of a curved part of the hook portion.

Advantageously the hook portion comprises a first and a second hook element and the folding mechanism may be arranged between the first and second hook element.

This may ease the build up and assembly of the carrying device.

In an embodiment the width adjusting mechanism may be incorporated in the folding mechanism.

This allows having a compact design and it may further provide for a comparably simple width adjusting mechanism.

Advantageously the folding mechanism may comprise a resilient member configured to move the hook portion into the unfolded position.

When the carrying device is taken out of a transport bag the carrying device and the hook portion, respectively, directly move into the unfolded position since the resilient member is configured to pull or push the hook portion into the unfolded position.

The resilient member may be embodied for example in the form of a spring, an elastic cord, an elastic plug or cylinder such as an elastomer cylinder, etc.

In a further embodiment the width adjusting mechanism may comprise an adjusting screw configured to engage the first and second hook element.

The adjusting screw may be screwed into an end of a first hook element via a thread in the first hook element and the adjusting screw may abut the second element via a free screw end so that the angle between the first and second hook element can be adjusted and varied.

Advantageously the hook portion may comprise an adjustable shoulder strap and a shoulder strap adjusting slider, said adjustable shoulder strap being connected to the shoulder blade rest and said shoulder strap adjusting slider, which shoulder strap adjusting slider is configured to slide on the hook portion.

The adjustable shoulder strap enhances the comfort for the user when she/he is carrying the carrying device.

The shoulder strap adjusting slider may comprise a handle configured to releasably fix the shoulder strap adjusting slider to the hook portion.

The handle may engage a clamping element or the like which fixes the shoulder strap adjusting slider to the hook portion by clamping. The shoulder strap adjusting slider may be adjusted continuously along a certain range on the hook portion.

In another embodiment the carrying device may comprise a continuous height adjusting mechanism arranged between the hook portion and the front portion and said continuous height adjusting mechanism being configured to adjust a position of the object support element.

The height adjusting mechanism may improve the flexibility of the carrying device, so that it can be used by user's having different heights and different torso heights, respectively. The height adjusting mechanism may also comprise some kind of a handle with a clamping element. The upper part or upper tube of the front portion may slide over or into a lower part or lower tube of the hook portion in order to provide the continuous adjustment of the height.

In a further embodiment the front portion may comprise a front rest with a front padding, said front rest being configured to rest on a user's front torso, preferably on a user's belly.

The front rest and front padding may enhance the comfort for the user.

The object support element may comprise an inclination adjusting component configured to adjust an inclination of the object support element. Such an inclination adjusting component may enable the user to adjust the angle and inclination of the object support element and thus also of the object such as for example tablet or laptop computer, according to her/his preferences. In addition depending on the natural light, it is possible for the user to adapt the inclination to avoid reflections on the computer screen for example.

The inclination adjusting component may comprise a ball joint arranged at on an end of a connecting arm. The connecting arm being connected with one to a free end of the front portion and with the other end to a tray of the object support element. In addition the inclination adjusting component may further a mechanism to clamp and releasably fix the ball joint so that the tray does not move once the inclination is adjusted. The connecting arm may be connected to the front portion via a joint that allows to fold up the tray and the object support element, respectively, for transporting and stowage purposes.

The hook portion and/or the front portion may comprise metal.

This provides for a stiff and rigid carrying device.

The front portion may comprise a waist band connected to the front portion and configured to extend around a user's waist.

Such a waist band may improve the comfort for the user and it may also improve the attachment of the carrying device on the user.

Generally, all terms used in the claims are to be interpreted according to their ordinary meaning in the technical field, unless explicitly defined otherwise herein. All references to "a/an/the element, device, portion, component, mechanism etc." are to be interpreted openly as referring to at least one instance of the element, device, portion, component, mechanism, etc., unless explicitly stated otherwise.

### BRIEF DESCRIPTION OF THE DRAWINGS

The invention is now described, by way of example, with reference to the accompanying drawings, in which:
Fig 1 schematically illustrates a side view of a carrying device according to the invention placed on a user;
Fig 2 illustrates a perspective view of the carrying device;
Fig 3 illustrates a side view of a hook portion and a front portion of a carrying device according to the invention;
Fig 4a illustrates a top down view on a width adjusting mechanism and a folding mechanism of a carrying device according to the invention with the hook portion in a folded position;
Fig 4b illustrates a side view of the width adjusting mechanism and the folding mechanism shown in figure 4a, the hook portion being almost in an unfolded position;
Fig 4c schematically illustrates a perspective side view of the width adjusting mechanism and the folding mechanism shown figures 4a and 4b, with the hook portion being in a folded position;
Fig 5a illustrates a part of the hook portion with a shoulder strap;
Fig 5b illustrates a part of the hook portion similar to figure 5a, with the shoulder strap connected to a shoulder strap adjusting slider, the shoulder strap adjusting slider being in a lower position;
Fig 5c illustrates part of the hook portion similar to figure 5a and 5b the shoulder strap adjusting slider being in an upper position; and
Fig 6 illustrates a perspective front view of the carrying device according to the invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

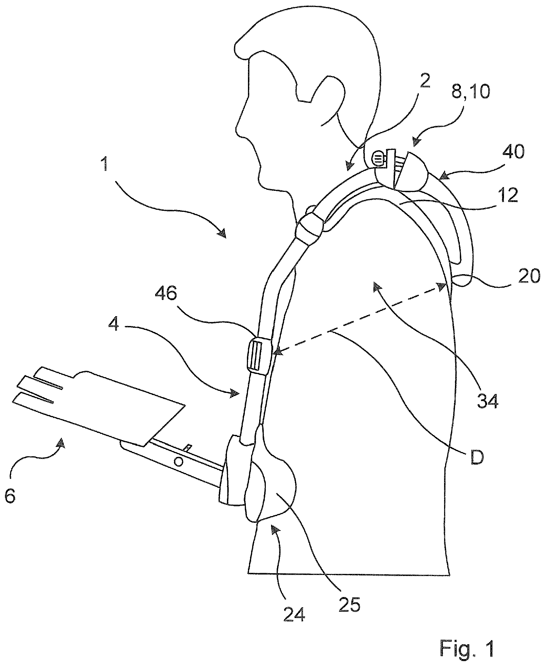

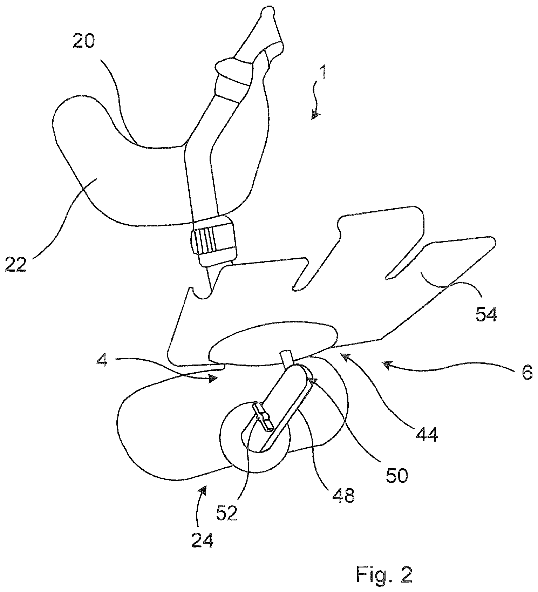

The carrying device 1 or carrying hook of the present invention is best illustrated in figures 1 to 3 and 6. Figure 1 illustrates a side view of the carrying device 1 placed on a user. The carrying device 1 comprises a hook portion 2 and a front portion 4. The hook portion 2 and the front portion 4 may be embodied in the form of tubes made of plastic, metal, carbon or the like. The front portion 4 is connected to an object support element 6, as best illustrated for example in figures 1 and 2. The object support element 6 is configured to carry one of the above mentioned object, such as a tablet computer or a laptop computer.

A folding mechanism 8 is arranged in an upper region 40 of the hook portion 2, preferably at a highest point, as seen in a vertical or longitudinal direction of the hook portion 2. The folding mechanism 8 is arranged in a curved part of the hook portion 2. When the folding mechanism 8 is arranged in the curved part the folding of the hook portion 2 has the best effect in terms of saving space for transport or storage.

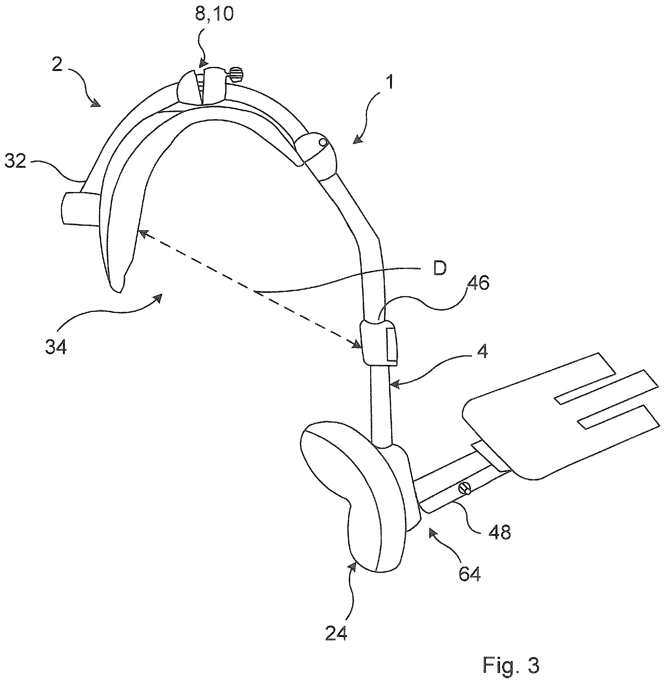

The hook portion 2 comprises a width adjusting mechanism 10, the folding mechanism 8, a shoulder strap 12 and a shoulder blade rest 20, as illustrated in the figures. The hook portion 2 forms a hook opening 34, said hook opening being arranged to receive an upper torso of a user, as illustrated in figure 1. The hook opening 34 comprises a width D. The width D is measured between a free end 32 of the hook portion 2 and an upper end 46 of the front portion 2, as illustrated in figures 1 and 3, and said width D can be changed and adapted by the width adjusting mechanism 10, as shown in figures 2, 4b and 5a to 5c. The width D can be adjusted to the size and width of a user's torso. A shoulder blade rest 20 is fixedly connected to a free end 32 of the hook portion 2. The shoulder blade rest 20 engages or rests on a user's shoulder blades for example via a shoulder padding 22 as best shown in figures 1, 2 and 6. The shoulder padding 22 is however not necessary to achieve the function of the carrying device 1 or carrying hook.

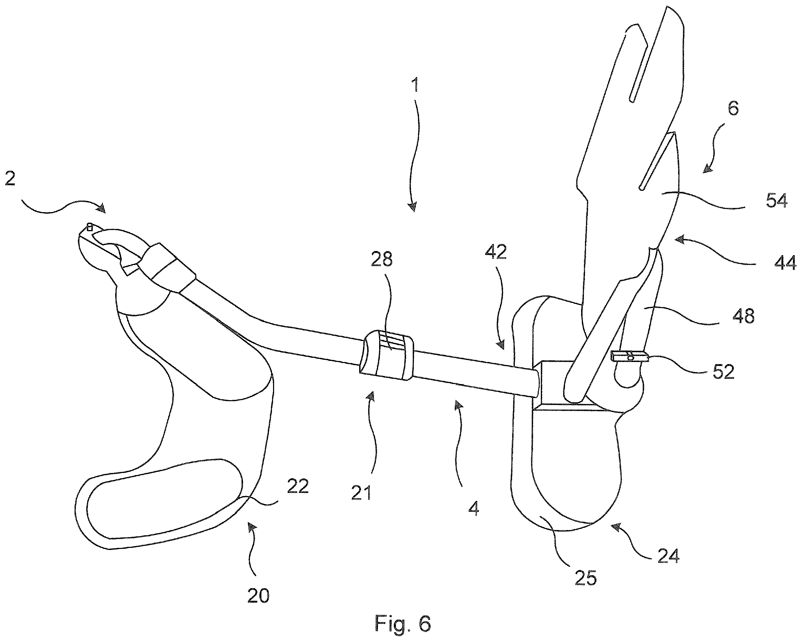

The front portion 4 is configured to glide over or into a straight part of the hook portion 2. The straight part of the hook portion 4 may be integrally formed with the curved part. The front portion 4 may be releasably fixed to the hook portion 2 via a continuous height adjusting mechanism 21 comprising some kind of a clamping engagement as shown in figure 6. The continuous height adjusting mechanism 21 does not comprise steps and can be adjusted stepless; - and it may further comprise a clamping fixture 28 in the form of a buckle or handle. The clamping fixture 28 and the handle or buckle, respectively may be opened so that the front portion 4 can move relative to the hook portion 2 in order to adjust the height of the object support element 6.

The front portion 2 may further comprise a front rest 24 comprising a front padding 25. The front rest 24 may be fixedly connected to a free end 42 of the front portion 4 so that the carrying device 1 rests against a user's front torso or belly as illustrated in figure 1. The front rest 24 and the front padding 25 is best illustrated in figures 1 to 3 and 6. The front rest 24 may be made of a hard plastic and the front padding 25 may be glued onto it.

The carrying device 1 is resting on the user via the shoulder blade rest 20 and the front rest 24. The shoulder blade rest 20 and the front rest 24 may extend in a direction perpendicular to the longitudinal direction of the carrying device 1 to provide torsion stability.

Figure 2 illustrates how the object support element 6 is connected to the front portion 4. The object support element 6 may comprise an inclination adjusting component 44 comprising a connecting arm 48 fixedly connected with one end to the front portion 4 and with another end rotatably and pivotably via a ball joint 50 to a tray 54 of the object support element 6. The connecting arm 48 may comprise two extending halves having a joint in between and configured to engage a ball of the ball joint 50. The two halves may be connected with a clamping screw piece 52 configured to engage the ball of the ball joint 52 to releasably fix the tray 54 in a chosen position.

In addition the connecting arm 48 may comprise a pivoting joint 64, as shown in figure 3, or the like at the end opposite the end comprising the ball joint 50, said pivoting joint 64 being blocked at a certain angle so that the connecting arm 48 cannot pivot freely downwards. The pivoting joint 64 allows to fold the object support element 6 up towards the front portion 4 and the hook portion 2, so that the carrying device 1 can be easily and space-savingly stowed, when it is not in use.

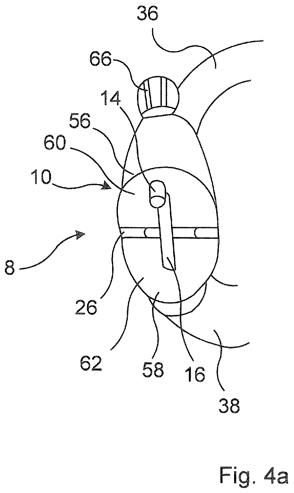

Turning now to figures 4a to 4c which show enlargements of the folding and width adjusting mechanism 8, 10, the hook portion 2 may comprise a first hook element 36 and a second hook element 38. The first hook element 36 and the second hook element 38 may be interconnected via joint 26 of the folding mechanism 8. The first and second hook elements 36, 38 may each comprise a first and second end piece 56, 58. Each of the first and second end pieces 56, 58 comprising first and second surfaces 60, 62; - the first surface 60 of the first end piece 56 being configured to abut against the second surface 62 of the second end piece 58, when an adjusting screw 14 of the width adjusting mechanism 10 is in an unscrewed position (not shown).

The folding mechanism 8 may further comprise a resilient member 16, such as for example a spring, an elastic cord (as shown) or an elastomer cylinder, said resilient member 16 being connected to the first and second end pieces 56, 58. The resilient member 16 is configured to pull the first and second hook elements 36, 38 of the hook portion 2 together so that the hook portion 2 is generally drawn into an unfolded position as best shown in figures 3, 4b and 5a to 5c. The resilient member 16 is arranged offset from the joint 26 so that it has leverage to pull the first and second hook element 36, 38 together into the unfolded position.

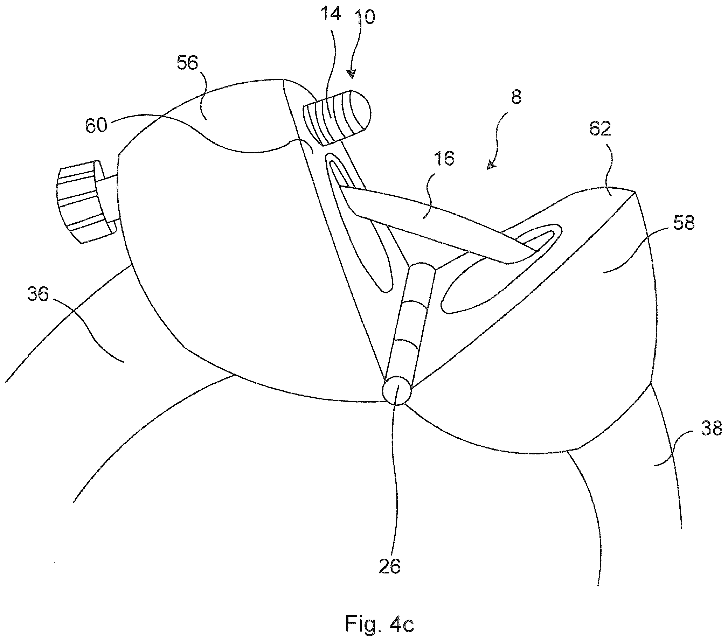

Figures 4a and 4c illustrate the hook portion 2 in the folded position in which the resilient member 16 is stretched.

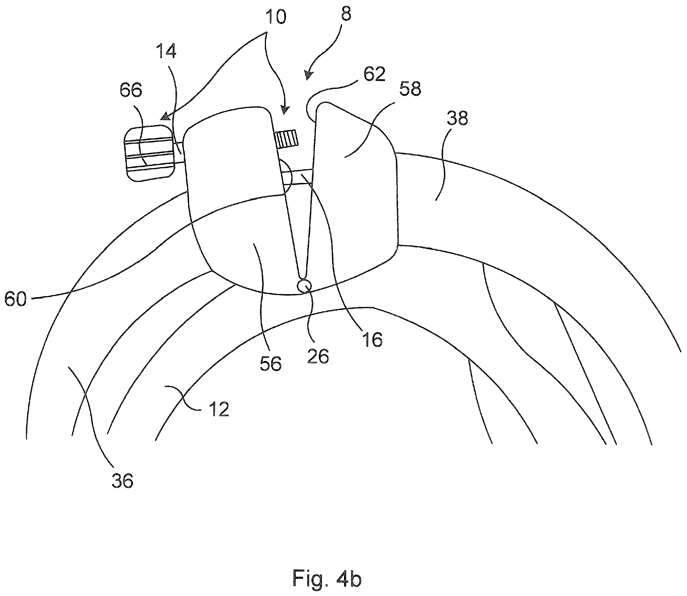

As previously mentioned and as best shown in figures 4a to 4c, the width adjusting mechanism 10 comprises the adjusting screw 14, which is configured to be screwed into one of the first or second end piece 56, 58 and to the engage the surface 60, 62 of the other end piece 56, 58. In the embodiment illustrated in the figures, the adjusting screw 14 is screwed into the first end piece 56 and engages the second surface 62 of the second end piece 58 via a free end. Screwing the adjusting screw 14 from an unscrewed position into a screwed position results in a change of width D of the hook opening 34. The adjusting screw 14 allows thus to easily vary the angle of the hook opening 34 of the hook portion 2 to adjust the carrying device to a user's upper torso. The adjusting screw 14 may comprise a gripping portion 66 (c.f. figures 4a and 4b) so that a user can easily access and adjust the position of the adjusting screw 14 and the width D of the hook opening 34, respectively.

The first and second end pieces 56, 58 may be made of a plastic or aluminium. The thread located in the first end piece 56 used to engage the adjusting screw 14 and the first and second surfaces 60, 62 may preferably be made of a metal for durability reasons.

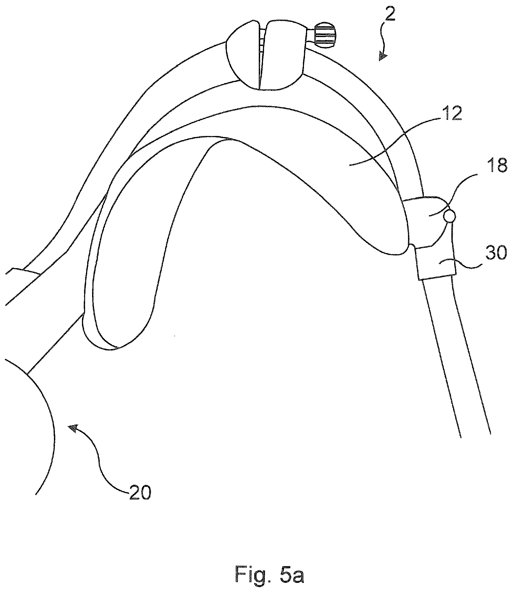

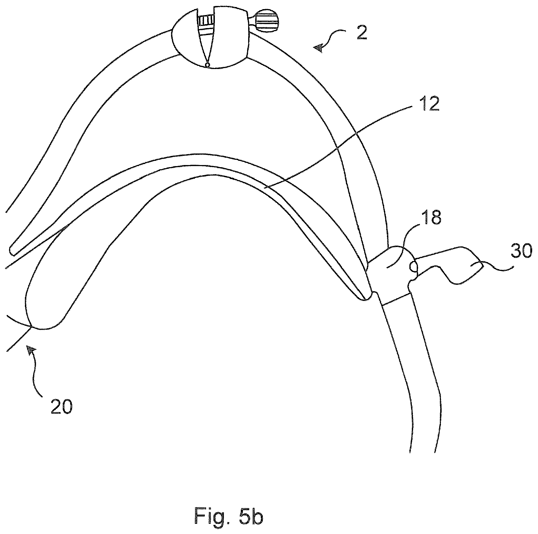

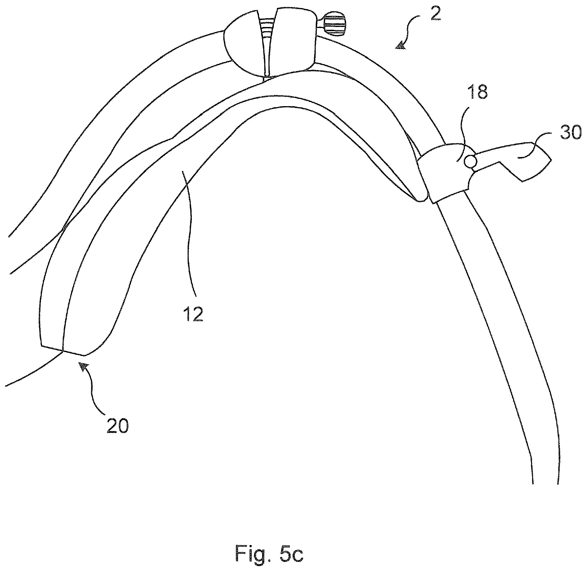

Figures 5a to 5c illustrate the shoulder strap 12 comprising a shoulder strap adjusting slider 18 having a handle 30 (c.f. figure 5b and 5c). The shoulder strap 12 is with one end fixed to the shoulder blade rest 20 and with the other end to a shoulder strap adjusting slider 18. Normally the shoulder strap 12 is positioned in a more or less neutral position. The shoulder strap 12 is not used to take on weight of the carrying device 1 and the object placed on the object support element 6. The shoulder strap 12 is mainly used for stability and comfort reasons. In figures 5b and 5c the shoulder strap 12 is illustrated in a low position (figure 5b) and in a high position (figure 5c) with the handle 30 in the open position in which the shoulder strap adjusting slider 18 can be moved on the hook portion 2 and the second hook element 38, respectively. In figure 5a the handle 30 is in the closed position.

The handle 30 of the shoulder strap adjusting slider 18 may engage some kind of a clamping mechanism when it is in the closed position, so that the shoulder strap 12 and the shoulder strap adjusting slider 18 can be releasably fixed to the hook portion 2.

The front portion 4 may comprise a waist band (not shown in the figures) configured to extend around a user's waist to provide additional stability and safety when the carrying device 1 is placed on the user. The waist band may comprise a clipping mechanism for releasably closing the waist band.

The width adjusting mechanism 10 and the adjusting screw 14 have been illustrated in the figures as being integrated or incorporated in the folding mechanism 8. It is however possible to install the width adjusting mechanism 8 between the shoulder blade rest 20 and the free end 32 of the hook portion 2 (not shown). The shoulder blade rest 20 may for example be connected to the adjusting screw and the adjusting screw may be screwed into a thread located at the free end 32 of the hook portion 2, so that the shoulder blade rest 20 could moved back and forth in order to change and adjust the width D of the hook opening 34.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A carrying device (1) comprising a single hook portion (2) having a shoulder blade rest (20) arranged at a free end (32) of the hook portion, a front portion (4) connected to the hook portion (2) and an object support element (6) connected to the front portion , said object support element being configured to carry an object, the hook portion being configured to be placed on the user from one side and to extend over a user's shoulder so that the shoulder blade rest engages the shoulder blades of the user and so that the front portion is resting on a user's front torso,
wherein the hook portion comprises a width adjusting mechanism (10) configured to adjust the width (D) of a hook opening (34) of the hook portion (2).

2. The carrying device according to claim 1, wherein the hook portion comprises a folding mechanism (8), arranged to allow folding of the hook portion between an unfolded position and a folded position, said folding mechanism being arranged in an upper region (40) of the hook portion.

3. The carrying device according to claim 2, wherein the hook portion comprises a first and a second hook element (36, 38) and wherein the folding mechanism (8) is arranged between the first and second hook element.

4. The carrying device according to claim 2 or 3, wherein the width adjusting mechanism is incorporated in the folding mechanism.

5. The carrying device according to any of claims 2-4, wherein the folding mechanism comprises a resilient member (16) configured to move the hook portion into the unfolded position.

6. The carrying device according to any of the preceding claims, wherein the width adjusting mechanism comprises an adjusting screw (14) configured to engage the first and second hook element.

7. The carrying device according to any of the preceding claims, wherein the hook portion comprises an adjustable shoulder strap (12) and a shoulder strap adjusting slider (18), said adjustable shoulder strap (12) being connected to the shoulder blade rest and said shoulder strap adjusting slider, which shoulder strap adjusting slider is configured to slide on the hook portion.

8. The carrying device according to claim 7, wherein shoulder strap adjusting slider comprises a handle (30) configured to releasably fix the shoulder strap adjusting slider to the hook portion.

9. The carrying device according to any of the preceding claims, comprising a continuous height adjusting mechanism (22) arranged between the hook portion and the front portion and said continuous height adjusting mechanism being configured to adjust a position of the object support element.

10. The carrying device according to any of the preceding claims, wherein the front portion comprises a front rest (24) with a front padding (25), said front rest being configured to rest on a user's front torso, preferably on a user's belly.

11. The carrying device according to any of the preceding claims wherein the object support element (6) comprises an inclination adjusting component (44) configured to adjust an inclination of the object support element (6).

12. The carrying device according to any of the preceding claims, wherein the hook portion and/or the front portion comprise metal.

13. The carrying device according to any of the preceding claims, wherein the front portion comprises a waist band connected to the front portion and configured to extend around a user's waist.

14. The carrying device according to any of the preceding claims, wherein the width (D) is measured between the free end (32) and an upper end (46) of the front portion (4).

## Patentansprüche

1. Tragevorrichtung (1), umfassend einen einzelnen Hakenabschnitt (2), der eine Schulterblattauflage (20), die an einem freien Ende (32) des Hakenabschnitts angeordnet ist, einen mit dem Hakenabschnitt (2) verbundenen vorderen Abschnitt (4) und ein mit dem vorderen Abschnitt verbundenes Objektträgerelement (6) aufweist, wobei das Objektträgerelement konfiguriert ist, ein Objekt zu tragen, wobei der Hakenabschnitt konfiguriert ist, auf dem Benutzer von einer Seite platziert zu werden und sich über die Schulter eines Benutzers zu erstrecken, so dass die Schulterblattauflage in die Schulterblätter des Benutzers eingreift und so, dass der vordere Abschnitt auf dem vorderen Torso eines Benutzers aufliegt, wobei der Hakenabschnitt einen Breiteneinstellmechanismus (10) umfasst, der konfiguriert ist, die Breite (D) einer Hakenöffnung (34) des Hakenabschnitts (2) einzustellen.

2. Tragevorrichtung nach Anspruch 1, wobei der Hakenabschnitt einen Faltmechanismus (8) umfasst, der eingerichtet ist, das Falten des Hakenabschnitts zwischen einer ausfalteten Position und einer eingefalteten Position zu ermöglichen, wobei der Faltmechanismus in einem oberen Bereich (40) des Hakenabschnitts angeordnet ist.

3. Tragevorrichtung nach Anspruch 2, wobei der Hakenabschnitt ein erstes und ein zweites Hakenelement (36, 38) umfasst und wobei der Faltmechanismus (8) zwischen dem ersten und zweiten Hakenelement angeordnet ist.

4. Tragevorrichtung nach Anspruch 2 oder 3, wobei der Breiteneinstellmechanismus in den Faltmechanismus integriert ist.

5. Tragevorrichtung nach einem der Ansprüche 2-4, wobei der Faltmechanismus ein elastisches Element (16) umfasst, das konfiguriert ist, den Hakenabschnitt in die ausgefaltete Position zu bewegen.

6. Tragevorrichtung nach einem der vorstehenden Ansprüche, wobei der Breiteneinstellmechanismus eine Einstellschraube (14) umfasst, die konfiguriert ist, in das erste und zweite Hakenelement einzugreifen.

7. Tragevorrichtung nach einem der vorstehenden Ansprüche, wobei der Hakenabschnitt einen einstellbaren Schultergurt (12) und einen Schultergurteinstellschieber (18) umfasst, wobei der einstellbare Schultergurt (12) mit der Schulterblattauflage und dem Schultergurteinstellschieber verbunden ist, wobei der Schultergurteinstellschieber konfiguriert ist, auf dem Hakenabschnitt zu gleiten.

8. Tragevorrichtung nach Anspruch 7, wobei der Schultergurteinstellschieber einen Griff (30) umfasst, der konfiguriert ist, den Schultergurteinstellschieber lösbar an dem Hakenabschnitt zu befestigen.

9. Tragevorrichtung nach einem der vorstehenden Ansprüche, umfassend einen kontinuierlichen Höheneinstellmechanismus (22), der zwischen dem Hakenabschnitt und dem vorderen Abschnitt angeordnet ist, und der kontinuierliche Höheneinstellmechanismus konfiguriert ist, eine Position des Objektträgerelements einzustellen.

10. Tragevorrichtung nach einem der vorstehenden Ansprüche, wobei der vordere Abschnitt eine vordere Auflage (24) mit einer vorderen Polsterung (25) umfasst, wobei die vordere Auflage konfiguriert ist, auf dem vorderen Torso eines Benutzers aufzuliegen, vorzugsweise auf dem Bauch eines Benutzers.

11. Tragevorrichtung nach einem der vorstehenden Ansprüche, wobei das Objektträgerelement (6) eine Neigungseinstellungskomponente (44) umfasst, die konfiguriert ist, eine Neigung des Objektträgerelements (6) einzustellen.

12. Tragevorrichtung nach einem der vorstehenden Ansprüche, wobei der Hakenabschnitt und/oder der vordere Abschnitt Metall umfassen.

13. Tragevorrichtung nach einem der vorstehenden Ansprüche, wobei der vordere Abschnitt ein Taillenband umfasst, das mit dem vorderen Abschnitt verbunden ist und das konfiguriert ist, sich um die Taille eines Benutzers zu erstrecken.

14. Tragevorrichtung nach einem der vorstehenden Ansprüche, wobei die Breite (D) zwischen dem freien Ende (32) und einem oberen Ende (46) des vorderen Abschnitts (4) gemessen wird.

## Revendications

1. Dispositif de transport (1) comprenant une seule portion de crochet (2) présentant un appui d'omoplate (20) agencé sur une extrémité libre (32) de la portion de crochet, une portion avant (4) raccordée à la portion de crochet (2) et un élément de support d'objet (6) raccordé à la portion avant, ledit élément de support d'objet étant configuré pour transporter un objet, la portion de crochet étant configurée pour être placée sur l'utilisateur d'un côté et pour s'étendre sur l'épaule d'un utilisateur de sorte que l'appui d'omoplate mette en prise les omoplates de l'utilisateur et de sorte que la portion avant repose sur le torse avant d'un utilisateur,
dans lequel la portion de crochet comprend un mécanisme d'ajustement de largeur (10) configuré pour ajuster la largeur (D) d'une ouverture de crochet (34) de la portion de crochet (2).

2. Dispositif de transport selon la revendication 1, dans lequel la portion de crochet comprend un mécanisme de pliage (8), agencé pour permettre le pliage de la portion de crochet entre une position dépliée et une position pliée, ledit mécanisme de pliage étant agencé dans une région supérieure (40) de la portion de crochet.

3. Dispositif de transport selon la revendication 2, dans lequel la portion de crochet comprend un premier et un second élément de crochet (36, 38) et dans lequel le mécanisme de pliage (8) est agencé entre le premier et second élément de crochet.

4. Dispositif de transport selon la revendication 2 ou 3, dans lequel le mécanisme d'ajustement de largeur est incorporé dans le mécanisme de pliage.

5. Dispositif de transport selon l'une quelconque des revendications 2-4, dans lequel le mécanisme de pliage comprend un élément élastique (16) configuré pour déplacer la portion de crochet dans la position dépliée.

6. Dispositif de transport selon l'une quelconque des revendications précédentes, dans lequel le mécanisme d'ajustement de largeur comprend une vis d'ajustement (14) configurée pour mettre en prise le premier et second élément de crochet.

7. Dispositif de transport selon l'une quelconque des revendications précédentes, dans lequel la portion de crochet comprend une bretelle ajustable (12) et un coulisseau d'ajustement de bretelle (18), ladite bretelle ajustable (12) étant raccordée à l'appui d'omoplate et audit coulisseau d'ajustement de bretelle, lequel coulisseau d'ajustement de bretelle est configuré pour coulisser sur la portion de crochet.

8. Dispositif de transport selon la revendication 7, dans lequel le coulisseau d'ajustement de bretelle comprend un manche (30) configuré pour fixer de manière libérable le coulisseau d'ajustement de bretelle à la portion de crochet.

9. Dispositif de transport selon l'une quelconque des revendications précédentes, comprenant un mécanisme d'ajustement de hauteur continue (22) agencé entre la portion de crochet et la portion avant et ledit mécanisme d'ajustement de hauteur continue étant configuré pour ajuster une position de l'élément de support d'objet.

10. Dispositif de transport selon l'une quelconque des revendications précédentes, dans lequel la portion avant comprend un appui avant (24) avec un rembourrage avant (25), ledit appui avant étant configuré pour reposer sur le torse avant d'un utilisateur, de préférence sur le ventre d'un utilisateur.

11. Dispositif de transport selon l'une quelconque des revendications précédentes, dans lequel l'élément de support d'objet (6) comprend un composant d'ajustement d'inclinaison (44) configuré pour ajuster une inclinaison de l'élément de support d'objet (6).

12. Dispositif de transport selon l'une quelconque des revendications précédentes, dans lequel la portion de crochet et/ou la portion avant comprennent du métal.

13. Dispositif de transport selon l'une quelconque des revendications précédentes, dans lequel la portion avant comprend une ceinture raccordée à la portion avant et configurée pour s'étendre autour de la taille d'un utilisateur.

14. Dispositif de transport selon l'une quelconque des revendications précédentes, dans lequel la largeur (D) est mesurée entre l'extrémité libre (32) et une extrémité supérieure (46) de la portion avant (4).
